# EUROPEAN PATENT APPLICATION

(11) **EP 3 217 367 A1**
(43) Date of publication of application: **13.09.2017**
(21) Application number: 17159761.0
(22) Date of filing: 08.03.2017
(51) Int. Cl.: G07F 17/00, G06Q 20/18, G06Q 30/06

(54) **AUTOMATED COOKING DEVICE AND ORDERING SYSTEM**

(30) Priority: 10.03.2016 TW 105107332
(71) Applicant: Lohas Fast Food Co., Ltd., 111 Taipei City (TW)
(72) Inventor: GUH, Tzuu-Shin, 100 TAIPEI CITY (TW)
(74) Representative: Becker Kurig Straus

(57) **Abstract**

The automated cooking device (10) and the ordering system (20) of the present invention combines a cooking machine (12), a detecting device (14) and a food manage system (16) in the ordering system (20), to provide diversified manners of cooking the food automatically. Through the identifying of the detecting device (14), the cooking machine (12) performs the cooking process automatically, so that the hot food is done quickly. The food manage system (16) is adapted for managing and storing food information and ensuring the food safety. The ordering system (20) can be operated by the consumer through an electronic communication device, not only convenient and fast in usage for the consumer, but also making the setting of sales channels and the selling very fast and convenient.

## Description

### BACKGROUND OF THE INVENTION

### 1. Field of the Invention

The present invention relates to cooking devices and more particularly, to an automated cooking device and an ordering system.

### 2. Description of the Related Art

People have a busy life now, so they eat out almost all the time. In order to improve the taste of the food, most restaurants serve the food with too much seasoning or oil, that will affect the health of the people eating such food for a long time. Besides, the traditional restaurants have little space therein, and it takes the consumers much time in queuing and waiting for the food to be cooked. In order to save time in meals, a part of the consumers choose to eat the simple fast food in the convenience stores, such as the microwaved food, instant noodles, and so on. Compared with the freshly cooked food, the fast food is less safe and less healthy, and will affect the health of the people eating such fast food frequently.

The inventor invented a cooking machine disclosed in Taiwan Patent No. I508688, which is adapted for cooking food, doesn't take the consumers much time for hot food, and is very convenient and fast in usage. Based on many years of experience of manufacturing, designing and developing in the related field, the inventor analyzed, tested and improved the cooking machine, not only increasing the convenience in usage for the consumers, but also making the setting of sales channels and the selling very convenient.

### SUMMARY OF THE INVENTION

It is a primary objective of the present invention to provide an automated cooking device which not only provides diversified automatic cooking manners and makes hot food quickly, but also reveals the safety information of the food for ensuring the food safety, makes the usage more convenient and faster for the consumers, and makes the setting of sales channels very convenient.

To attain the above objective, the present invention provides an automated cooking device which includes a cooking machine, a detecting device, and a food manage system. The cooking machine is adapted for cooking and heating food automatically. The detecting device is connected with the cooking machine for scanning and reading food information and identifying food types. The food manage system is connected with the cooking machine and the detecting device for managing and storing the food information. The food manage system has a cooking unit and a display unit. The cooking unit offers food cooking parameters and the food is provided to the cooking machine to be cooked automatically after the food information of the food is read by the detecting device. The display unit displays the food information.

In the embodiment of the present invention, the food manage system has a food resume unit read by the detecting device and providing source material content, producing and processing information, quality inspection, logistics distribution and food expiration date, which are displayed by the display unit.

In the embodiment of the present invention, the food manage system has a sales unit for counting sales volume and inventory of the food, catching sales status of the automated cooking device, and analyzing popular food, unsalable food and sales data of sales periods.

In the embodiment of the present invention, the food manage system has a supplier unit for managing order processing about shipment and delivery of goods from suppliers and conserving basic data of the suppliers.

In the embodiment of the present invention, the food manage system has a register unit providing payment information and payment services including cash payment service and electronic payment service. The cash payment service is performed in a way that the automated cooking device collects cash. The electronic payment service is performed by charging credit cards, smart cards and stored-value cards.

In the embodiment of the present invention, the register unit has an account manage function for settling amount of money periodically.

In the embodiment of the present invention, the detecting device is adapted for scanning one-dimensional barcodes, two-dimensional barcodes, and radio frequency identification tags.

In the embodiment of the present invention, the cooking machine is capable of performing one of cooking modes of steaming, boiling, roasting and frying.

It is another objective of the present invention to provide an ordering system for the consumer to get done hot food only by operating the ordering system through an electronic communication device, and the ordering system has the functions of automatic cooking, internet of things, mobile payment, digital finance and cloud-based big data, ensuring the food safety, achieving the effects of energy-saving, quickness and convenience, thereby capable of promoting Chinese food to the whole world.

To attain the above objective, the present invention provides an ordering system which includes an automated cooking device, a user interface, and an ordering mode. The user interface is adapted for a consumer to browse and operate by an electronic communication device. The ordering mode has a geographic positioning unit, an ordering unit and a payment unit. The geographic positioning unit provides location information of the automated cooking device. The ordering unit provides food information of the automated cooking device. The payment unit provides payment information of the automated cooking device. The ordering mode is operated by the consumer through the user interface.

In the embodiment of the present invention, the ordering system has a cloud manage group for storing the food information, location information, payment information and consumer information of the automated cooking device. The cloud manage group is connected with the automated cooking device. Through the internet, information of the automated cooking device stored in the cloud manage group is obtained, and the consumer information is transmitted to the automated cooking device.

In the embodiment of the present invention, the user interface is accessed by one of the manners of scanning a two-dimensional barcode, downloading an application software and linking to a web address.

In the embodiment of the present invention, the geographic positioning unit is adapted for automatically obtaining geographic position information of the consumer and providing the consumer geographic position information of the automated cooking device. Through the geographic positioning unit, the geographic position information of the closest automated cooking device to the consumer is transmitted to the consumer.

In the embodiment of the present invention, the ordering unit provides the food information of the automated cooking device for allowing seeing a menu and ordering food. Besides, the ordering unit provides the consumer a reserved cooking function of the cooking machine.

In the embodiment of the present invention, the payment unit allows the consumer to pay online or by a networked automatic teller machine through the internet.

The detailed structure, features and assembling or using manner of the automated cooking device and the ordering system of the present invention will be specified in the detailed description of the embodiment given hereinafter. However, those skilled in the field of the present invention should understand that the detailed description and the specific embodiment instanced for the implementing of the invention are given for illustration only, not for limiting the scope of the invention.

### BRIEF DESCRIPTION OF THE DRAWINGS

FIG. 1 is a schematic block diagram of an automated cooking device of the present invention.
FIG. 2 is a flow chart showing the process of using the automated cooking device of the present invention.
FIG. 3 is a schematic block diagram of an ordering system of the present invention.
FIG. 4 is a flow chart showing the process of using the ordering system of the present invention.

### DETAILED DESCRIPTION OF THE INVENTION

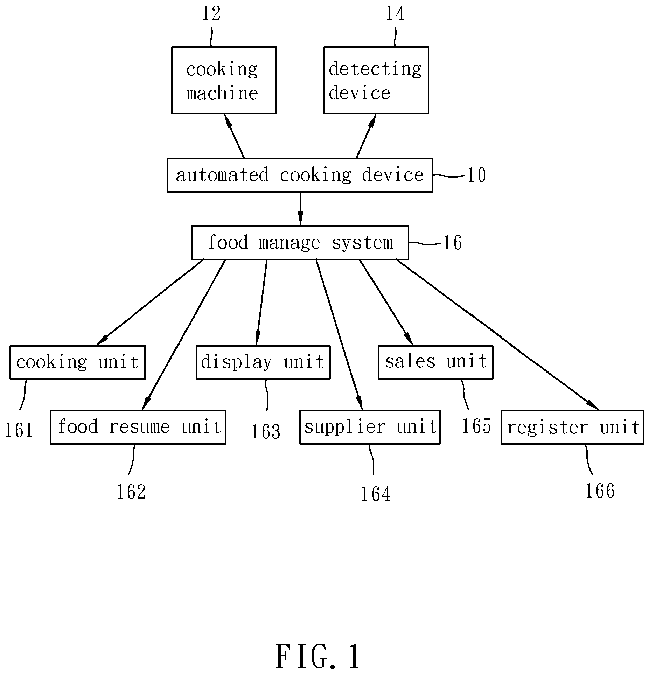

Referring to FIG. 1, an automated cooking device 10 of the present invention includes a cooking machine 12, a detecting device 14, and a food manage system 16. The automated cooking device 10 can be used in various sales channels including convenience stores, traditional shops, hypermarkets, coffee shops and dining cars, to provide hot food to consumers by spending relatively less time, allowing the consumers to have diversified, delicious, fresh and healthy food.

The cooking machine 12 is adapted for cooking and heating food automatically. Through heat conduction of hot water and vapor and use of various containers, the cooking machine 12 can provide diversified cooking manners. The cooking machine 12 can perform the cooking mode of steaming, to make steamed dumplings for example, in a way that the food is put in a container and heated by vapor until the food is done. Alternately, the cooking machine 12 can perform the cooking mode of boiling in a way that the food is put into hot water to be boiled, and then hot soup or sauce can be made to be mixed with the done food, so that dried noodles, noodles in soup and boiled vegetables can be made. The cooking machine 12 can also perform the cooking mode of roasting, to make roasted sausages or meat for example, in a way that a heat source directly heats the food. The cooking machine 12 can also perform the cooking mode of frying by circulating hot air in a way that a heating implement is used to generate hot air vortexes from top to bottom to make the food surrounded by hot air. The cooking machine 12 is very convenient and fast in usage. The related structure of the aforesaid cooking machine 12 may be similar to the cooking machine disclosed by the inventor in Taiwan Patent No. I508688, that will not be repeatedly mentioned here.

The detecting device 14 is connected with the cooking machine 12 for scanning and reading food information and identifying food types and food information. The detecting device 14 is adapted for scanning one-dimensional barcodes, two-dimensional barcodes, and radio frequency identification tags.

The food manage system 16 is connected with the cooking machine 12 and the detecting device 14 for managing and storing the food information. The food manage system 16 has a cooking unit 161, a food resume unit 162, a display unit 163, a supplier unit 164, a sales unit 165, and a register unit 166. Through the detecting device 14 scanning and reading the cooking unit 161 and the food resume unit 162, the food information is outputted to the display unit 163, so that the consumer can know the food information. The dealers can use the supplier unit 164 and the sales unit 165 to manage the food information. The register unit 166 not only provides payment information to the consumers, but also provides an account manage function to the dealers.

The cooking unit 161 offers food cooking parameters and the food is provided to the cooking machine 12 to be cooked automatically after the food information of the food is read by the detecting device 14. For example, when the food chosen by the consumer is steamed dumpling and identified by the detecting device 14, the cooking unit 161 offers the steaming function, automatically decides the temperature, time and vapor amount for cooking according to the contents and weight of the steamed dumpling, and offers the food cooking parameters for the display unit 163 to display. Then, the food is provided to the cooking machine 12 to be cooked automatically. The food resume unit 162 provides source material content, producing and processing information, quality inspection, logistics distribution and food expiration date. The consumer can find out if the food has allergen or artificial additive or if the food is vegetarian from the source material content, find out the cultivation condition, place of origin and manufacturing process about the food from the producing and processing information, find out if the food has the government-issued certification, certification of organic products or authentication of food inspection from the quality inspection, find out the storage temperature and time in the delivery process of the food from the logistics distribution, and find out the preserving time of the food from the food expiration date. The display unit 163 is adapted for displaying the food information, allowing the consumers to know the details of the food they choose. The consumers can also obtain the food information by a cell phone and store the food information in the cell phone. The supplier unit 164 is adapted for managing order processing about shipment and delivery of goods from suppliers and conserving basic data of the suppliers, allowing the dealers to manage the data of the suppliers. The sales unit 165 is adapted for counting sales volume and inventory of the food, catching sales status of the automated cooking device 10, and analyzing popular food, unsalable food and sales data of sales periods. The data can be stored in the cloud storage to form big data for future reference in producing and selling, benefiting the future purchasing, cost controlling and managing safety stock of food inventory. The register unit 166 provides payment information and payment services including cash payment service and electronic payment service. The cash payment service is performed in a way that the automated cooking device 10 collects cash. The electronic payment service is performed by charging credit cards, smart cards and stored-value cards. The register unit 166 has the account manage function for settling amount of money periodically and analyzing the profit. Besides, the register unit 166 has another function of cooperating with financial institutions to immediately distribute the received funds to accounts through banks, so that the inconvenience of respectively keeping accounts, auditing and writing off can be saved, that has the effect of immediateness and transparency.

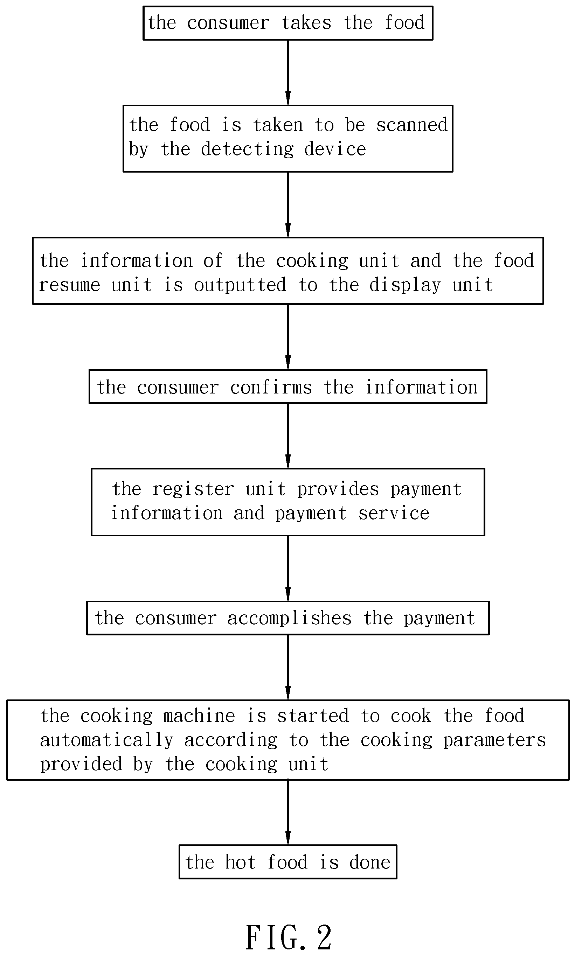

As shown in FIG. 2, it can be understood from the above description that when the automated cooking device 10 is actually in use, the food is taken by the consumer to be scanned by the detecting device 14, so that the food type and the food information are identified. The food manage system 16 outputs the information of the cooking unit 161 and the food resume unit 162 to the display unit 163, so that the consumer can know the food information. After the consumer confirms the information, the register unit 166 provides the payment information and the payment service. After the consumer accomplishes the payment, the cooking machine 12 is started to cook and heat the food automatically according to the cooking parameters provided by the cooking unit 161. After that, the consumer can get the done hot food.

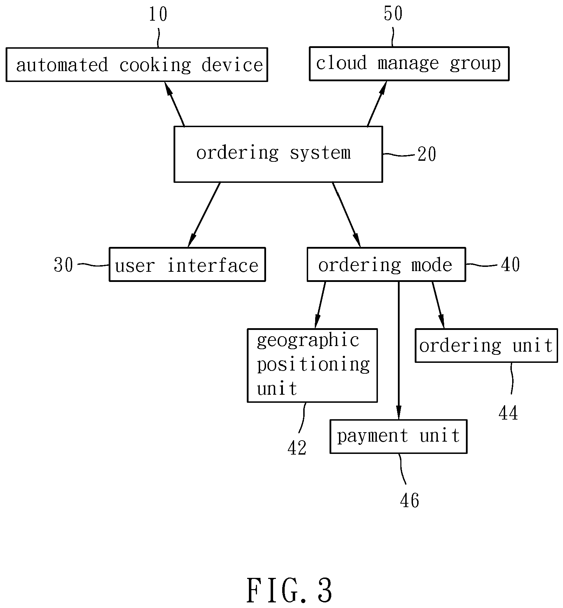

Referring to FIG. 3, an ordering system 20 of the present invention includes an automated cooking device 10, a user interface 30, an ordering mode 40, and a cloud manage group 50.

The user interface 30 is adapted for the consumer to browse and operate by an electronic communication device. The user interface 30 is accessed by one of the manners of scanning a two-dimensional barcode, downloading an application software and linking to a web address.

The ordering mode 40 is operated through the user interface 30. The ordering mode 40 has a geographic positioning unit 42, an ordering unit 44 and a payment unit 46. The geographic positioning unit 42 is adapted for automatically obtaining geographic position information of the consumer and providing the consumer geographic position information of the automated cooking device 10. The ordering unit 44 provides food information of the automated cooking device 10 for the consumer to see a menu and order food. The payment unit 46 provides payment information of the automated cooking device 10, allowing the consumer to pay online or by a networked automatic teller machine through the internet, achieving the payment function of distributing money through the operating system of the bank. Besides, the geographic position information of the closest automated cooking device 10 to the consumer can be transmitted to the consumer by the geographic positioning unit 42. The ordering unit 44 can provide the consumer a reserved cooking function of the cooking machine 12.

The cloud manage group 50 is adapted for storing the food information, location information, payment information and consumer information of the automated cooking device 10. The cloud manage group 50 is connected with the automated cooking device 10. Through the internet, the consumer can obtain the information of the automated cooking device 10 stored in the cloud manage group 50, and the consumer information is transmitted to the automated cooking device 10. At last, all the sales information will be obtained for the application of big data.

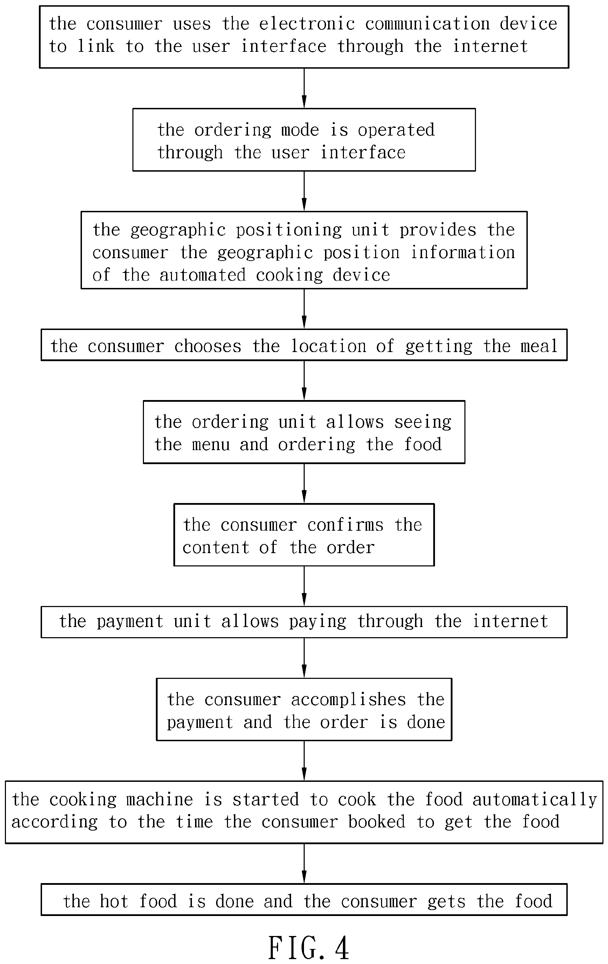

As shown in FIG. 4, it can be understood from the above description that when the ordering system 20 is actually in use, the consumer uses the electronic communication device to link to the user interface 30 through the internet and operates the ordering mode 40 through the user interface 30. At first, the geographic positioning unit 42 provides the consumer the geographic position information of the automated cooking device 10 for the consumer to choose the location of getting the meal. Then, the ordering unit 44 allows the consumer to see the menu and order the food. After the consumer confirms the content of the order, the payment unit 46 allows the consumer to pay through the internet. After the consumer accomplishes the payment, the cooking machine 12 is started to cook and heat the food automatically according to the time the consumer booked to get the food. In this way, the consumer can get the food at the time the hot food is done.

In summary, the automated cooking device 10 and the ordering system 20 of the present invention combines the cooking machine 12, the detecting device 14 and the food manage system 16 in the ordering system 20, to provide diversified manners of cooking the food automatically. Through the identifying of the detecting device 14, the cooking machine 12 performs the cooking process automatically, so that the hot food is done quickly. The food manage system 16 is adapted for managing and storing the food information and ensuring the food safety. The ordering system 20 can be operated by the consumer through the electronic communication device. Compared with the traditional restaurants and the sales manner thereof, the present invention is not only more convenient and faster in usage for the consumers, capable of ensuring and taking charge of the food safety immediately and transparently, but also makes the setting of sales channels and the selling very convenient.

## Claims

1. An automated cooking device (10) comprising:
a cooking machine (12) for cooking and heating food automatically;
a detecting device (14) connected with the cooking machine (12) for scanning and reading food information and identifying food types; and
a food manage system (16) connected with the cooking machine (12) and the detecting device (14) for managing and storing the food information, the food manage system (16) having a cooking unit (161) and a display unit (163), the cooking unit (161) offering food cooking parameters, the food being provided to the cooking machine (12) to be cooked automatically after the food information of the food is read by the detecting device (14), the display unit (163) displaying the food information.

2. The automated cooking device (10) as claimed in claim 1, wherein the food manage system (16) has a food resume unit (162) read by the detecting device (14) and providing source material content, producing and processing information, quality inspection, logistics distribution and food expiration date, which are displayed by the display unit (163) .

3. The automated cooking device (10) as claimed in claim 1, wherein the food manage system (16) has a sales unit (165) for counting sales volume and inventory of the food, catching sales status of the automated cooking device (10), and analyzing popular food, unsalable food and sales data of sales periods.

4. The automated cooking device (10) as claimed in claim 1, wherein the food manage system (16) has a supplier unit (164) for managing order processing about shipment and delivery of goods from suppliers and conserving basic data of the suppliers.

5. The automated cooking device (10) as claimed in claim 1, wherein the food manage system (16) has a register unit (166) providing payment information and payment services including cash payment service and electronic payment service.

6. The automated cooking device (10) as claimed in claim 5, wherein the register unit (166) has an account manage function for settling amount of money periodically.

7. The automated cooking device (10) as claimed in claim 5, wherein the cash payment service of the register unit (166) is performed in a way that the automated cooking device (10) collects cash.

8. The automated cooking device (10) as claimed in claim 5, wherein the electronic payment service of the register unit (166) is performed by charging credit cards, smart cards and stored-value cards.

9. The automated cooking device (10) as claimed in claim 1, wherein the detecting device (14) is adapted for scanning one-dimensional barcodes, two-dimensional barcodes, and radio frequency identification tags.

10. The automated cooking device (10) as claimed in claim 1, wherein the cooking machine (12) is capable of performing one of cooking modes of steaming, boiling, roasting and frying.

11. An ordering system (20) comprising:
an automated cooking device (10) as claimed in claim 1;
a user interface (30) for a consumer to browse and operate by an electronic communication device; and
an ordering mode (40) having a geographic positioning unit (42), an ordering unit (44) and a payment unit (46), the geographic positioning unit (42) providing location information of the automated cooking device (10), the ordering unit (44) providing food information of the automated cooking device (10), the payment unit (46) providing payment information of the automated cooking device (10), the ordering mode (40) being operated by the consumer through the user interface (30) .

12. The ordering system (20) as claimed in claim 11, wherein the ordering system (20) has a cloud manage group (50) for storing the food information, location information, payment information and consumer information of the automated cooking device (10); the cloud manage group (50) is connected with the automated cooking device (10); through internet, information of the automated cooking device (10) stored in the cloud manage group (50) is obtained, and the consumer information is transmitted to the automated cooking device (10).

13. The ordering system (20) as claimed in claim 12, wherein the user interface (30) is accessed by one of manners of scanning a two-dimensional barcode, downloading an application software and linking to a web address.

14. The ordering system (20) as claimed in claim 12, wherein the geographic positioning unit (42) is adapted for automatically obtaining geographic position information of the consumer and providing the consumer geographic position information of the automated cooking device (10).

15. The ordering system (20) as claimed in claim 14, wherein through the geographic positioning unit (42), the geographic position information of the closest automated cooking device (10) to the consumer is transmitted to the consumer.

16. The ordering system (20) as claimed in claim 12, wherein the ordering unit (40) provides the food information of the automated cooking device (10) for the consumer to see a menu and order food.

17. The ordering system (20) as claimed in claim 16, wherein the ordering unit (40) provides the consumer a reserved cooking function of the cooking machine (12) .

18. The ordering system (20) as claimed in claim 12, wherein the payment unit (46) allows the consumer to pay online or by a networked automatic teller machine through the internet.
